# EUROPÄISCHE PATENTSCHRIFT

(11) **EP 2 978 299 B1**
(45) Veröffentlichungstag und Bekanntmachung des Hinweises auf die Patenterteilung: **05.09.2018**
(21) Anmeldenummer: 14719182.9
(22) Anmeldetag: 25.03.2014
(51) Int. Cl.: A01B 59/06, A01B 71/06

(54) **KOPPELUNGSTEIL**
COUPLING PART
PIÈCE D'ATTELAGE

(30) Priorität: 25.03.2013 AT 2282013
(43) Veröffentlichungstag der Anmeldung: 03.02.2016
(73) Patentinhaber: Scharmüller, Josef, 4892 Fornach (AT); Scharmüller, Josef, jun., 4892 Fornach (AT)
(72) Erfinder: Scharmüller, Josef, 4892 Fornach (AT); Scharmüller, Josef, jun., 4892 Fornach (AT)
(74) Vertreter: Gibler & Poth Patentanwälte KG
(86) Internationale Anmeldenummer: PCT/AT2014/000051
(87) Internationale Veröffentlichungsnummer: WO 2014/153577

(56) Entgegenhaltungen:
- DE-A1- 2 900 866
- DE-A1- 3 009 284
- DE-A1- 4 132 889
- DE-A1-102009 056 071

## Beschreibung

Die Erfindung betrifft ein Koppelungsteil eines Fahrzeugkoppelungssystems gemäß dem Oberbegriff des Patentanspruches 1.

Im kommunalen, land- oder forstwirtschaftlichen Bereich sind eine Vielzahl an Anhänger und aufsetzbaren Werkzeugen bekannt, welche unterschiedliche Aufgaben ausführen, beispielsweise Schneepflug, Schneefräse, Kehrvorrichtung, Mähmaschine und dergleichen. Im Betrieb sind hierfür für die Unterschiedlichen Anhänger und Aufsätze in der Regel eine Reihe unterschiedlicher Fahrzeuge mit unterschiedlichen Anhänge und Kupplungssysteme vorgesehen, welche eine Kupplungsvorrichtung für die unterschiedlichen Anhänger und Aufsätze aufweisen, beispielsweise Zugpendel oder Dreipunkt-Kraftheber. Hierbei haben die unterschiedlichen Anhänger und Aufsätze oft sehr unterschiedliche Anforderungen an die Anhänge- und Kupplungssysteme, beispielsweise weil gewisse Anhänger gelenkig angekuppelt werden sollen und andere, wie beispielsweise ein Schneepflug, fest am Fahrzeug befestigt werden sollen.

Nachteilig an derartigen Systemen ist, dass im Betrieb in der Regel ein oftmaliger Wechsel des Anhängers oder des Anbaugerätes nötig ist, wodurch ein entsprechend großer Fuhrpark notwendig ist. Weiters benötigt das Wechseln eines Anhängers in der Regel oft zwei Personen, oder ist von einer erfahrenen Person nur unter großem Zeitaufwand und Kraftaufwand möglich, da das Wechseln des Anhängers ein Hantieren am Anhänge- oder Kupplungssystem, beispielsweise zum Verbinden der Zapfwelle oder elektrischer Anschlüsse, notwendig ist. Hierbei stellt ein derartiger Wechsel ein erhebliches Gefahrenpotenzial dar, da für den Wechsel eine Person im Gefahrenbereich zwischen Zugfahrzeug und Anhänger hantieren muss.

Die DE 41 32 889 A1 beschreibt eine Vorrichtung zum Kuppeln eines Schleppers mit einem Anbaugerät, wobei neben einer Zentriervorrichtung in Form mehrerer Zapfen und entsprechend gegengleicher Aufnahmen, weiteres auch die Kupplungsstücke für Elektrik und Hydraulik, sowie eine Zapfwelle angeordnet sind.

Die DE 10 2009 056 071 A1 beschreibt eine Vorrichtung zum front- bzw. heckseitigen Ankuppeln von Anbaugeräten an einen Traktor, wobei elektrische, mechanische und/oder hydraulische Verbindungen zwischen Traktor und Anbaugerät beim ankuppeln hergestellt werden.

Die DE 30 09 284 A1 beschreibt eine Kupplung zum Verbinden eines Arbeitsgeräts mit einem Zugfahrzeug, wobei neben einer Zapfwellenverbindung auch elektrische und hydraulische Anschlüsse vorgesehen sind.

Die DE 29 00 866 A1 beschreibt eine Kupplungsvorrichtung welche eine geräteseitige sowie eine zugfarzeugseitige Kupplungsplatte mit elektrischen, mechanischen bzw. elektrischen Anschlüssen, wobei zum Kuppeln eine der Kupplungsplatten partiell angehoben wird, und dann die Verbindung der Anschlüsse erfolgt.

Aufgabe der Erfindung ist es daher ein Koppelungsteil eines Fahrzeugkoppelungssystems anzugeben, mit welchem die genannten Nachteile vermieden werden können, mit welchem ein schneller und sicherer Koppelungsvorgang möglich ist.

Erfindungsgemäß wird dies durch die Merkmale des Patentanspruches 1 erreicht.

Dadurch ergibt sich der Vorteil, dass beispielsweise das Ankoppeln eines Anhängers oder eines Anbaugerätes an ein Fahrzeug wesentlich erleichter werden kann. Hierbei kann der Wechsel im Wesentlichen vollautomatisch erfolgen, da das Kupplungsteil das Gegenkopplungsteil mittels der Positioniereinrichtung geeignet ausrichtet, es lagefest mit der Fixiereinrichtung fixiert. Dadurch kann der Betreiber des Fahrzeuges während des Koppelungsvorganges in der Fahrkabine verbleiben, wodurch der Zeitaufwand verringert und das Gefahrenpotenzial nahezu eliminiert werden kann. Weiters kann das Gegenkopplungsteil direkt am Anhänger oder Werkzeug angebracht sein oder ein Adapter mit einem herkömmlichen Kopplungssystem sein, damit herkömmliche Anhänger und Werkzeuge verwendet werden können.

Die Erfindung betrifft weiters ein Fahrzeugkoppelungssystem gemäß dem Oberbegriff des Patentanspruches 8.

Weiters betrifft die Erfindung ein Fahrzeug gemäß dem Patentanspruch 10.

Die Erfindung betrifft weiters ein Anbaumodul gemäß dem Oberbegriff des Patentanspruches 12.

Weiters betrifft die Erfindung ein Verfahren zum Koppeln eines Fahrzeugkoppelungssystems gemäß dem Patentanspruch 14.

Aufgabe der Erfindung ist es daher weiters ein Verfahren zum Koppeln eines Fahrzeugkoppelungssystems anzugeben, mit welchem die genannten Nachteile vermieden werden können, mit welchem ein schneller und sicherer Koppelungsvorgang möglich ist.

Erfindungsgemäß wird dies durch die Merkmale des Patentanspruches 19 erreicht.

Die Vorteile des Verfahren entsprechen den oben genannten Vorteilen des Koppelungsteils.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine bevorzugte Ausführungsform eines Koppelungsteils als axonometrische Darstellung;
Fig. 2 die bevorzugte Ausführungsform eines Koppelungsteils in Seitenansicht;
Fig. 3 und 4 ein Detail einer bevorzugten Ausführungsform eines Fahrzeugkoppelungssystems in zwei unterschiedlichen Zuständen;
Fig. 5 bis 7 ein weiteres Detail der bevorzugten Ausführungsform eines Fahrzeugkoppelungssystems in drei unterschiedlichen Zuständen;
Fig. 8 eine bevorzugte Ausführungsform eines Anbaumoduls als axonometrische Darstellung,
Fig. 9 die bevorzugte Ausführungsform eines Anbaumoduls in Seitenansicht;
Fig. 10 die bevorzugte Ausführungsform eines Anbaumoduls aus Sicht von hinten;
Fig. 11 die bevorzugte Ausführungsform eines Anbaumoduls aus Sicht von vorne;
Fig. 12 und 13 die bevorzugte Ausführungsform eines Anbaumoduls und eine bevorzugte Ausführungsform eines Fahrzeuges in zwei unterschiedlichen Zuständen;
Fig. 14 die bevorzugte Ausführungsform eines Anbaumoduls und die bevorzugte Ausführungsform eines Fahrzeuges im gekoppelten Zustand in einer axonometrischen Darstellung; und
Fig. 15 die bevorzugte Ausführungsform eines Anbaumoduls und die bevorzugte Ausführungsform eines Fahrzeuges im gekoppelten Zustand aus Sicht von hinten.

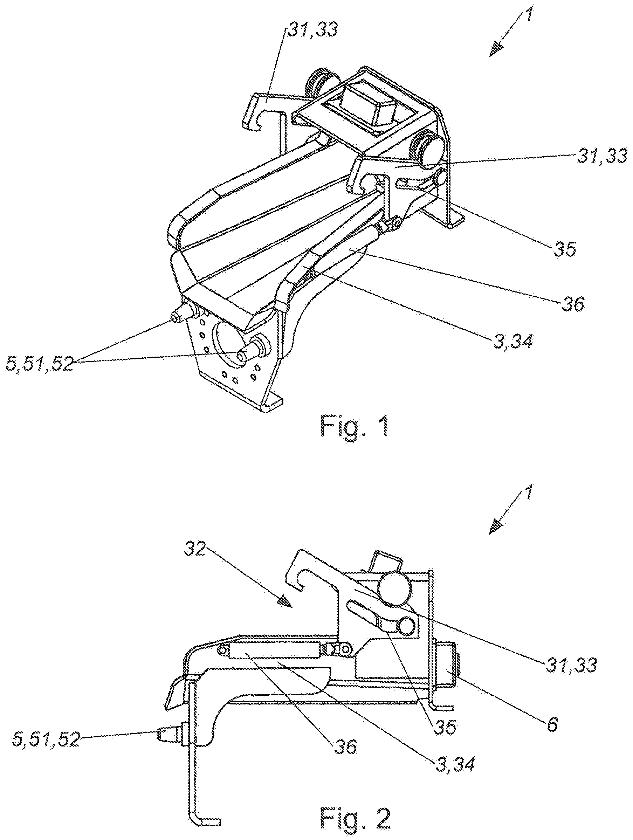

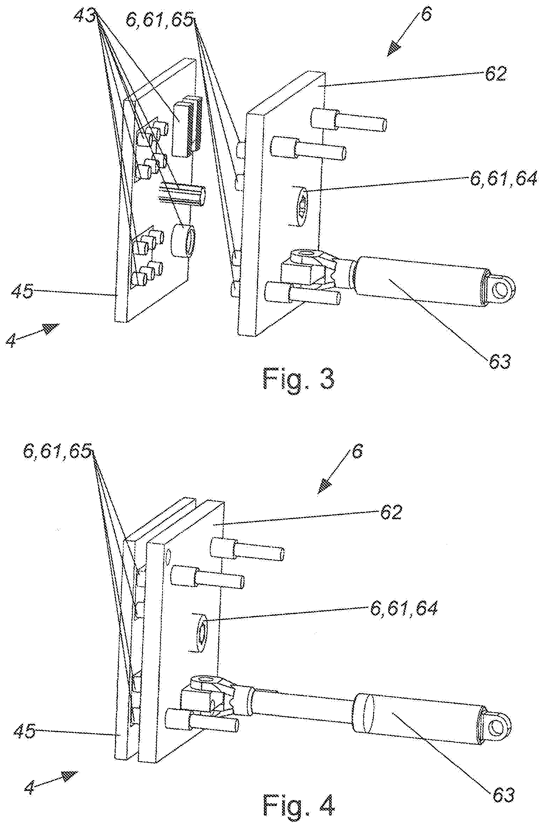

Die Fig. 1 bis 7 sowie 12 bis 15 zeigen zumindest Teile von bevorzugten Ausführungsformen eines Koppelungsteils 1 eines Fahrzeugkoppelungssystems 2. Ein Fahrzeugkoppelungssystem 2 ist ein System zum lösbaren Koppeln eines Anbaumoduls 8 an ein Fahrzeug 7. Das Fahrzeugkoppelungssystem 2 umfasst ein Koppelungsteil 1 und ein mit dem Koppelungsteil 1 verbindbares Gegenkoppelungsteil 4. Hierbei kann das Koppelungsteil 1 beispielsweise an dem Fahrzeug 7 oder an dem Anbaumodul 8 befestigt sein.

Vorgesehen ist, dass das Koppelungsteil 1 eine Positioniereinrichtung 3 zum Führen eines Gegenkoppelungsteils 4 in eine Fixierposition bei einem Ankoppelungsvorgang aufweist, dass eine Fixiereinrichtung 5 zwischen einer Freigabestellung und einer Fixierstellung bewegbar angeordnet ist, wobei die Fixiereinrichtung 5 in der Fixierstellung ein Gegenkoppelungsteil 4 in der Fixierposition lagefest fixieren kann. Dadurch kann ein Koppelvorgang besonders schnell und sicher erfolgen.

Die Positioniereinrichtung 3 ist eine Einrichtung des Koppelungsteils 1 welche dazu ausgebildet ist bei einem Kopplungsvorgang das mit dem Koppelungsteil 1 zu koppelnde Gegenkoppelungsteil 4 aus einem vorgebbaren Bereich in eine vorgebbare Fixierposition überzuführen, wobei das in der Fixierposition angeordnete Gegenkoppelungsteil 4 durch die Fixiereinrichtung 5 lagefest am Koppelungsteil 1 fixiert werden kann.

Die Fixiereinrichtung 5 ist hierbei dazu ausgebildet, mit einem, insbesondere zumindest zum Teil gegengleichen, Teil des Gegenkoppelungsteils 4 in Eingriff zu gelangen und das Gegenkoppelungsteil 4 mittels Formschluss lagefest, also insbesondere starr, mit dem Koppelungsteil 1 zu verbinden. Die Fixierung erfolgt hierbei mit einem in der Fixierposition angeordnetem Gegenkoppelungsteil 4, wobei die Fixierposition auch als Befestigungsposition des Gegenkoppelungsteils 4bezeichnet werden kann.

Weiters kann insbesondere ein Fahrzeugkoppelungssystem 2 umfassend einen Koppelungsteil 1 und ein Gegenkoppelungsteil 4 vorgesehen sein, wobei das Gegenkoppelungsteil 4 in der Fixierposition durch die Fixiereinrichtung 5 lagefest am Koppelungsteil 1 fixierbar ist.

Bei einem Verfahren zum Koppeln eines Fahrzeugkoppelungssystems 2 ist vorgesehen, dass in einem Positionierschritt das Gegenkoppelungsteil 4 in eine Fixierposition eines Koppelungsteils 1 geführt wird, wobei das Gegenkoppelungsteil 4 in einem Fixierschritt von einer Fixiereinrichtung 5 des Koppelungsteils 1 lagefest an dem Koppelungsteil 1 fixiert wird. Dadurch kann ein Koppelvorgang besonders schnell und sicher erfolgen.

Weiters kann insbesondere ein Fahrzeug 7 umfassend wenigstens einen Koppelungsteil 1 vorgesehen sein.

Bevorzugt kann vorgesehen sein, dass das Koppelungsteil 1 eine Kontaktiereinrichtung 6 mit bewegbar, insbesondere linear bewegbar, angeordneten Anschlüssen 61 aufweist, wobei die Kontaktiereinrichtung 6 in der Fixierstellung der Fixiereinrichtung 5 die Anschlüsse 61 in Richtung eines in der Fixierposition befindlichen Gegenkoppelungsteils 4 bewegen kann. Die Kontaktiereinrichtung 6 ist dazu ausgebildet, bei einem in der Fixierposition gehaltenem Gegenkoppelungsteil 4 die Anschlüsse 61 mit dem Gegenkoppelungsteil 4, insbesondere selbsttätig, wirkzuverbinden. Die Wirkverbindung der Anschlüsse 61 mit dem Gegenkoppelungsteil 4 bedeutet in diesem Zusammenhang, dass die Anschlüsse 61 mit Gegenanschlüssen 43 des Gegenkoppelungsteils 4 verbunden sind, Hierbei kann eine zuverlässige, und insbesondere selbsttätige, Verbindung der Anschlüsse 61 mit dem Gegenkoppelungsteil 4 erfolgen, da das Gegenkoppelungsteil 4 legefest in einer vorgebbaren Position, nämlich der Fixierposition, gehalten ist. Die Verbindung kann durch ein Bewegen der Anschlüsse 61 durch die Kontaktiereinrichtung 6 in Richtung des Gegenkoppelungsteils 4 erfolgen.

Weiters kann vorgesehen sein, dass das Gegenkoppelungsteil 4 Gegenanschlüsse 43 aufweist, und dass die Kontaktiereinrichtung 6 die Anschlüsse 61 des Koppelungsteils 1 und Gegenanschlüsse 43 eines in der Fixierposition befindlichen Gegenkoppelungsteils 4 wirkverbinden kann.

Bei dem Verfahren kann vorgesehen sein, dass anschließend in einem Kontaktierschritt von einer Kontaktiereinrichtung 6 des Koppelungsteils 1 Anschlüsse 61 des Koppelungsteils 1 und Gegenanschlüsse 43 des Gegenkoppelungsteils 4 wirkverbinden werden.

Alternativ kann vorgesehen sein, dass das Koppelungsteil 1 fixe Anschlüsse 61 aufweist. Hierbei werden die fixen Anschlüsse 61 im Positionierschritt mit dem Gegenkoppelungsteil 4, insbesondere selbsttätig, wirkverbunden. Die Wirkverbindung der Anschlüsse 61 mit dem Gegenkoppelungsteil 4 bedeutet in diesem Zusammenhang, dass die Anschlüsse 61 mit Gegenanschlüssen 43 des Gegenkoppelungsteils 4 verbunden sind. Dies kann besonders bevorzugt dann erfolgen, wenn beim Positionierschritt eine Zentrierung des Gegenkoppelungsteils 4 erfolgt, da dadurch eine gut geführte Bewegung der Anschlüsse 61 zu den Gegenanschlüssen 43 erfolgen kann. Die fixen Anschlüsse 61 können wie die bewegbar angeordneten Anschlüsse 61 der Kontaktiereinrichtung 6 ausgebildet sein.

Besonders bevorzugt kann ein Anbaumodul 8 für ein Fahrzeug 7 vorgesehen sein, wobei das Anbaumodul 8 einen Gegenkoppelungsteil 4 mit Gegenanschlüsse 43 aufweist, dass der Gegenkoppelungsteil 4 an das Koppelungsteil 1 des Fahrzeuges 7 lagefest fixierbar ist, und dass die Gegenanschlüsse 43 mit den Anschlüssen 61 des Koppelungsteils 1 verbindbar sind.

Wie in der bevorzugten Ausführungsform in Fig. 1 und 2 dargestellt kann besonders bevorzugt vorgesehen sein, dass die Positioniereinrichtung 3 eine Zentrieraufnahme 34 aufweist, in welcher ein Einschubkörper 41 des Gegenkoppelungsteils 4 eingebracht werden kann, und dass sich die Zentrieraufnahme 34 in Richtung eines ersten Endes der Zentrieraufnahme 34 verengt. Durch das Bewegen des Einschubkörpers 41 in Richtung des sich verengenden Endes der Zentrieraufnahme 34 kann durch eine zueinander gerichtete Relativbewegung zwischen Koppelungsteil 1 und Gegenkoppelungsteil 4 auf einfache Weise eine Zentrierung und eine damit verbundene Positionierung des Gegenkoppelungsteils 4 zu dem Koppelungsteil 1 erreicht werden. Die Relativbewegung kann beispielsweise durch ein Heranfahren des Fahrzeuges 7 an das Anbaumodul 8 erreicht werden.

Der Einschubkörper 41 des Anbaumoduls 8 kann hierbei insbesondere zumindest bereichsweise gegengleich zu der Zentrieraufnahme 34 ausgebildet sein. Dadurch kann der Einschubkörper 41 in der Fixierposition großflächig in der Zentrieraufnahme 34 anliegen, wodurch beispielsweise gut Biegemomente zwischen Koppelungsteil 1 und Gegenkoppelungsteil 4 übertragen werden können. Besonders bevorzugt kann vorgesehen sein, dass die Positioniereinrichtung 3 eine Fangvorrichtung 31 aufweist, und dass die Fangvorrichtung 31 ausgebildet ist einen in einem Fangbereich 32 angeordneten Gegenkoppelungsteil 4 in die Fixierposition zu verbringen. Hierbei kann insbesondere vorgesehen sein, dass im Positionierschritt das Gegenkoppelungsteil 4 von der Fangvorrichtung 31 in die Fixierposition gezogen wird. Der Fangbereich 32 ist hierbei jener Bereich, in welchem sich das Gegenkoppelungsteil 4 befinden muss, um von der Fangvorrichtung 31 erfasst zu werden.

Hierbei kann insbesondere vorgesehen sein, dass die Fangvorrichtung 31 wenigstens einen beweglichen Fangarm 33 aufweist. Der Fangarm 33 kann hierbei schwenkbar gelagert sein und einen hakenförmigen Endbereich aufweisen, welcher Endbereich in eine Fangaufnahme 44 des Gegenkoppelungsteils 4 greifen, und dadurch den Gegenkoppelungsteil 4 in die Fixierposition ziehen kann. Hierbei können die Fangaufnahmen 44 insbesondere als am Einschubkörpers 41 angeformte Fortsätze ausgebildet sein. Gemäß der bevorzugten Ausführungsform können zwei Fangarme 33 vorgesehen sein, welche beidseitig von der Zentrieraufnahme 34 angeordnet sind.

Besonders bevorzugt kann vorgesehen sein, dass der Fangarm 33 derart bewegbar gelagert ist, dass der Fangarm 33 bei einer Einziehbewegung zunächst in Richtung der Zentrieraufnahme 34 bewegt wird und anschließend in Richtung des ersten Endes der Zentrieraufnahme 34 bewegt wird. Die kann insbesondere durch ein Kulissen-Nockensystem erreicht werden, wie die in Fig. 1 und 2 dargestellt ist.

In Fig. 1 und 2 ist die Fangvorrichtung 31 in einer Aufnahmeposition dargestellt, in welcher das Gegenkoppelungsteil 4 in den Fangbereich eingebracht werden kann. Der Fangbereich 32 umfasst gemäß der bevorzugten Ausführungsform jener Positionen des Gegenkoppelungsteils 4, in welchen die Fangaufnahmen 44 zwischen dem Fangarm in der Aufnahmeposition und der Zentrieraufnahme 34 angeordnet sind.

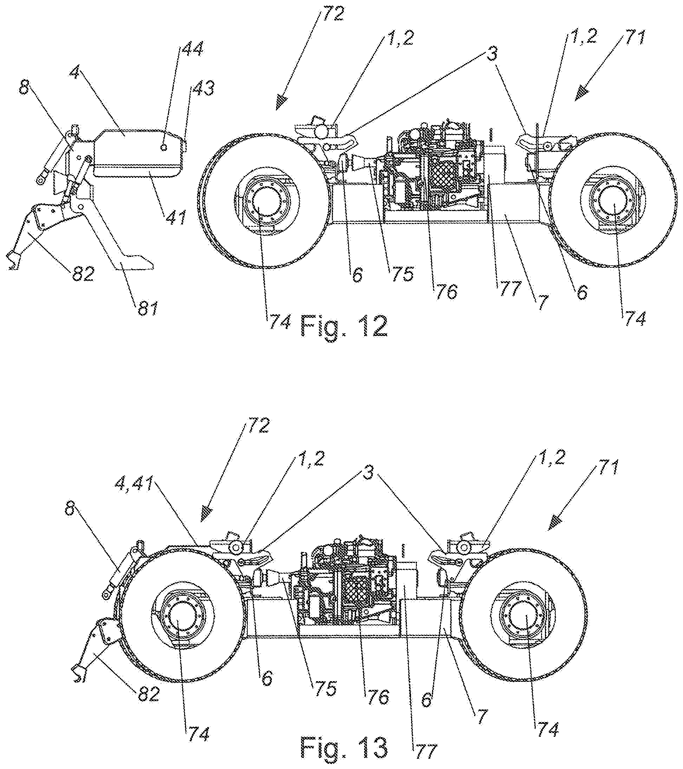

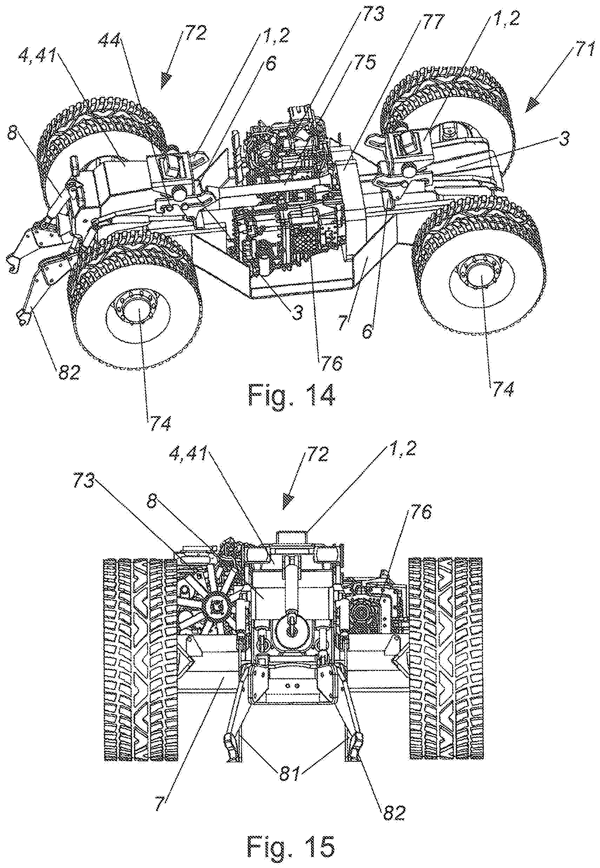

In Fig. 13 und 14 ist die Fangvorrichtung 31 in einer Einziehposition dargestellt, in welcher das Gegenkoppelungsteil 4 in der Fixierposition angeordnet ist.

Die Kraft für die Einziehbewegung kann hierbei durch einen Hydraulikzylinder 36 erfolgen. Durch diese Bewegung des Fangarms 33 kann ein im Fangbereich angeordneter Gegenkoppelungsteil 4 selbst in einer schiefen Ausgangsposition zunächst in eine zum Koppelungsteil 1 waagrechte Lage von dem Fangarm 33 gedrückt werden und anschließend in Richtung die Fixierposition gezogen werden.

Wie in Fig, 3 und 4 dargestellt kann besonders bevorzugt vorgesehen sein, dass die Kontaktiereinrichtung 6 eine beweglich gelagerte Andockplatte 62 aufweist, wobei die Anschlüsse 61 an der Andockplatte 62 angeordnet sind, und dass die Andockplatte 62 mittels einer Verschiebeeinheit 63 von einer ersten Position in eine zweite Position verschiebbar ist, wobei in der zweiten Position die Anschlüsse 61 der Andockplatte 62 mit einem in der Fixierposition angeordneten Gegenkoppelungsteil 4 wirkverbunden sein können. Hierbei kann in dem Kontaktierschritt die Verschiebeeinheit 63 die Andockplatte 62 mit den Anschlüssen 61 in Richtung der Gegenanschlüsse 43 verschieben, und dadurch die Anschlüsse 61 mit den Gegenanschlüsse 43 verbinden. Dadurch können auf einfache und zuverlässige Weise eine Vielzahl unterschiedlicher Anschlüsse 61 mit den entsprechenden Gegenanschlüssen 43 verbunden werden.

Gemäß der dargestellten bevorzugten Ausführungsform kann insbesondere vorgesehen sein, dass die Verschiebeeinheit 63 als Hydraulikzylinder ausgebildet ist. Alternativ kann vorgesehen sein, dass die Verschiebeeinheit 63 als Spindeltrieb, Linearantrieb oder ähnliches ausgebildet ist.

Besonders bevorzugt kann vorgesehen sein, dass die Kontaktiereinrichtung 6 im Bereich des ersten Endes der Zentrieraufnahme 34 angeordnet ist. Hierbei kann insbesondere im Bereich des sich verengenden ersten Endes der Zentrieraufnahme 34 ein besonders geringes Spiel des Gegenkoppelungsteils 4 gegenüber dem Koppelungsteil erreicht werden, wobei eine besonders zuverlässige Verbindung der Anschlüsse 61 mit den Gegenanschlüssen 43 in diesem Bereich möglich ist.

Die Kontaktiereinrichtung 6 kann insbesondere eine Vielzahl an unterschiedlich ausgebildeten Anschlüssen 61 aufweisen.

Weiters kann vorgesehen dass die Gegenanschlüsse 43 an einer Gegenandockplatte 45 angeordnet sind, welche gegenüber dem restlichen Gegenkoppelungsteil 4 lagefest angeordnet ist.

Insbesondere kann vorgesehen sein, dass die Anschlüsse 61 der Kontaktiereinrichtung 6 einen elektrischen Anschluss 65, einen hydraulischen Anschluss und/oder einen Druckluftanschluss umfassen. Dabei kann das Anbaumodul 8 elektrisch, hydraulisch und/oder pneumatisch betrieben werden, wobei es die benötigte Energie oder das benötigte Betriebsmittel vom Fahrzeug 7 erhalten kann.

Weiters kann insbesondere vorgesehen sein, dass die Anschlüsse 61 der Kontaktiereinrichtung 6 einen Zapfwellenabtrieb 64 und/oder einen Antriebswellenabtrieb umfassen. Ein Zapfwellenabtrieb 64 oder ein Antriebswellenabtrieb sind hierbei koppelbare Verbindungen einer Zapfwelle oder einer Antriebswelle.

Durch den als ZapfweUenabtrieb 64 ausgebildeten Anschluss kann das Anbaumodul 8 mechanische Tätigkeiten verrichten, wobei die benötigte Bewegungsenergie im Fahrzeug 7 erzeugt wird und durch die Zapfwelle an das Anbaumodul 8 weitergeleitet wird.

Durch den als Antriebswellenabtrieb ausgebildeten Anschluss kann das Anbaumodul 8 als Achsmodul ausgebildet sein, welches für das Fahrzeug 7 eine zusätzliche angetriebene Achse bereitstellt, wodurch beispielsweise ein zweiachsiges Fahrzeug 7 schnell in ein dreiachsiges Fahrzeug 7 gewandelt werden kann,

Weiters kann vorgesehen sein, dass das Anbaumodul 8 auf einer Seite das Gegenkoppelungsteil 4 aufweist, an welchen es an das Fahrzeug gekoppelt werden kann, und an einer gegenüberliegenden Seite ein weiteres Koppelungsteil 1 aufweist, an welchen ein weiteres Anbaumodul 8 angekoppelt werden kann. Dadurch kann eine besonders flexibel einsetzbare modulare Bauweise des Fahrzeuges 7 mit einer Vielzahl an Anbaumodulen 8 erreicht werden. Dies kann beispielsweise dann besonders vorteilhaft sein, wenn das Anbaumodul 8 als Achsmodul ausgeführt ist.

Insbesondere kann vorgesehen sein, dass die Kontaktiereinrichtung zwischen 10 und 50 Anschlüsse aufweist.

Gemäß einer vorteilhaften Weiterbildung kann vorgesehen sein, dass die Anschlüsse 61 Kontakte für Steuersignale aufweisen. Diese Kontakte für Steuersignale können beispielsweise als Bussystem ausgebildet sein. Derartige Steuersignale können beispielsweise Ventile im Anbaumodul 8 direkt ansteuern. Weiters kann vorgesehen sein, dass das Anbaumodul 8 eine Steuereinheit umfasst, welche Steuereinheit von den Steuersignalen gesteuert ist. Vorteilhaft daran ist, dass bei herkömmlichen Anbaugeräten aufgrund der Schnittstelle des Kopplungssystems oft lediglich eine an oder aus Steuerung möglich ist. Durch die Ansteuerung der Steuereinheit ist hierbei eine kontrollierte und stufenlose Ansteuerung möglich. Weiters kann dadurch die Anzahl der Anschlüsse 61 gering gehalten werden, da lediglich die Kontakte für die Steuersignale sowie eine Versorgung mit Energie oder Betriebsmittel ausreichend ist.

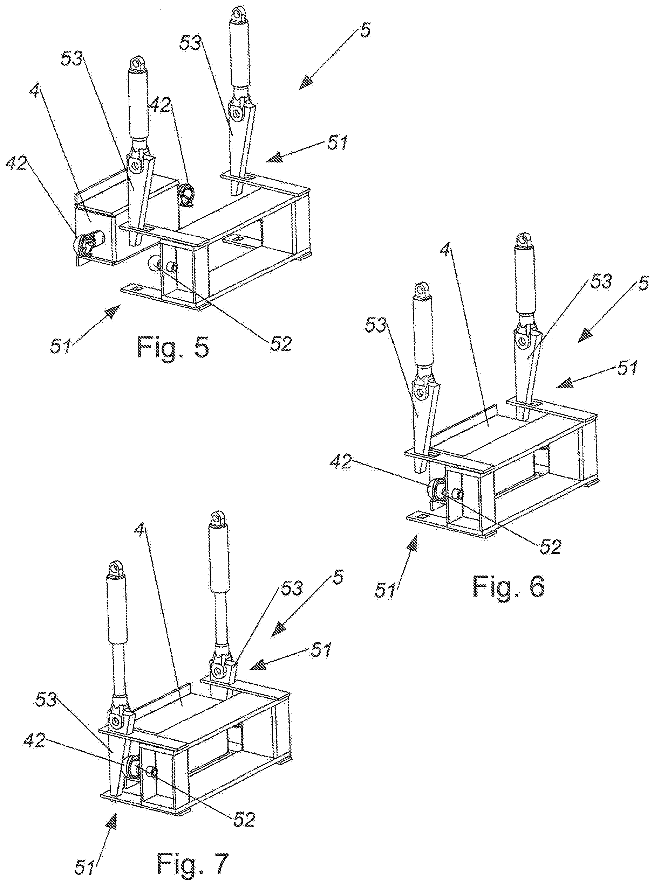

Wie in Fig. 5 bis 7 dargestellt kann vorgesehen sein, dass die Fixiereinrichtung 5 wenigstens ein Fixierelement 51 mit einem Kontaktelement 52 aufweist, und dass das wenigstens eine Fixierelement 51 einen verschiebbaren, insbesondere keilförmigen, Fixierbolzen 53 aufweist, welcher Fixierbolzen 53 ein am Kontaktelement 52 aufliegendes Gegenkontaktelement 42 eines Gegenkoppelungsteils 4 in der Fixierposition hintergreifen und am Kontaktelement 52 fixieren kann. In Fig. 1 und 2 ist die Fixiereinrichtung 5 lediglich unvollständig dargestellt. In Fig. 5 bis 7 sind zwei Fixierelemente 51 in unterschiedlichen Zuständen Fixierschrittes dargestellt. Hierbei kann eine besonders zuverlässige und spielfreie Fixierung des Gegenkoppelungsteils 4 an dem Koppelungsteil 1 erreicht werden.

Hierbei zeigt Fig. 5 die Fixiereinrichtung 5 und Teile des Gegenkoppelungsteils 4 während des Positionierschritts. Die Fixiereinrichtung 5 ist hierbei in der Freigabestellung.

Fig. 6 zeigt die Fixiereinrichtung 5 in der Freigabestellung, wobei das Gegenkoppelungsteil 4 in der Fixierposition ist. Hier kommen die Kontaktelemente 52 und die Gegenkontaktelemente 42 in Kontakt.

In dem Zustand in Fig. 7 wurden die Fixierbolzen 53 in die Fixierstellung verbracht, wodurch die Kontaktelemente 52 und die Gegenkontaktelemente 42 in Kontakt gehalten werden, und eine feste Verbindung zwischen Koppelungsteil 1 und Gegenkoppelungsteil 4 besteht.

Die Fixiereinrichtung 5 kann insbesondere als Dreipunkt- oder als Vierpunktfixierung ausgebildet sein, wodurch eine zuverlässige starre Fixierung erfolgen kann.

In Fig. 12 bis 16 ist eine bevorzugte Ausführungsform eines Fahrzeuges 7 dargestellt, wobei die Karosserie mit der Fahrerkabine nicht dargestellt ist.

Hierbei kann das Fahrzeug 7 insbesondere wenigstens zwei Achsen 74 aufweisen, wobei dieses in der bevorzugten Ausführungsform als Zweiachser mit zwei Achsen 74 ausgeführt ist. Hierbei können insbesondere beide Achsen 74 angetrieben und gelenkt sein.

Besonders bevorzugte kann vorgesehen sein, dass das Fahrzeug 7 einen Mittelmotor 73 und einen neben dem Mittelmotor 73 angeordneten Getriebe 76 umfasst, dass Mittelmotor 73 und Getriebe 76 mittels einer Getriebeverbindung 77 wirkverbunden sind, und dass Mittelmotor 73, Getriebe 76 und Getriebeverbindung 77 u-förmig zueinander angeordnet sind. Die Getriebeverbindung 77 kann beispielsweise als Riementrieb, Kettentrieb ausgebildet sein oder als eine Kette von Zahnrädern, welche das Drehmoment vom Mittelmotor 73 an das Getriebe 76 weiterleiten. Die Getriebeverbindung 77 und das Getriebe 76 können hierbei eine Getriebeeinheit bilden. Durch die vorteilhafte Anordnung des Mittelmotors 73 und des Getriebes 76 in der Fahrzeugmitte, wobei durch die U-förmige Anordnung die Länge des Mittelmotors 73 zusammen mit dem Getriebe 76 im Vergleich zu einer Gesamtlänge des Fahrzeuges 7 gering sind, kann eine besonders kompakte Bauweise erreicht werden. Durch diese kompakte Bauweise kann das Fahrzeug selbst bei der Anordnung von Kopplungsteilen 1 im Frontbereich 71 und im Heckbereich 72 eine Gesamtlänge des Fahrzeuges 7 erreicht werden, welche nicht über die Gesamtlänge eines herkömmlichen vergleichbaren Fahrzeuges hinaus geht.

Das Fahrzeug 7 kann weiters insbesondere eine mittig angeordnete Zapfwelle 75 und/oder eine Antriebwelle aufweisen, welche mit der Kontaktiereinrichtung 6 wirkverbunden sind, wobei das Drehmoment der Zapfwelle 75 und/oder der Antriebwelle durch die Kontaktiereinrichtung 6 an das Anbaumodul 8 weitergeleitet werden können.

Die Zapfwelle 75 und/oder die Antriebwelle können insbesondere mit der Getriebeverbindung 77 wirkverbunden sein, wobei die Getriebeverbindung 77 das Getriebe 76 mit der Zapfwelle 75 und/oder die Antriebwelle wirkverbindet.

Weiters kann vorgesehen sein, dass das Fahrwerk des Fahrzeuges 7, insbesondere hydraulisch, vorgebbar höhenverstellbar ist, wodurch beim Verfahren zum Koppeln das Koppelungsteil 1 in eine für das Anbaumodul 8 geeignete Höhe gebracht werden kann.

Besonders bevorzugt kann vorgesehen sein, dass das Fahrzeug 7 einen Frontbereich 71 und einen Heckbereich 72 aufweist, und dass jeweils ein Koppelungsteil 1 an dem Frontbereich 71 und dem Heckbereich 72 angeordnet ist. Hierbei können die beiden Koppelungsteile 1 insbesondere ident zueinander ausgebildet sein. Dadurch kann das Fahrzeug 7 für besonders viele Tätigkeiten und Aufgaben eingesetzt werde.

Weiters kann vorgesehen sein, dass das Koppelungsteil in Betriebslage oberhalb der Achse 74 angeordnet ist. Dadurch können selbst bei schweren Anbaumodulen 8 ein Kippen des Fahrzeuges unterbunden werden und ein besonders gutes Fahrverhalten erreicht werden.

Das Anbaumodul 8 kann auf vielfältige Weise ausgebildet sein. Beispielsweise kann das Anbaumodul 8 als Werkzeug, beispielsweise Schneepflug, Schneefräse, Straßenkehrmaschine, Mähmaschine oder dergleichen ausgebildet sein, welches an das Fahrzeug 7 fest ankoppelbar ist.

Besonders bevorzugt kann vorgesehen sein, dass das Anbaumodul 8 eine einfahrbare Aufstellvorrichtung 81 aufweist. Durch die einfahrbare Aufstellvorrichtung 81 kann das Anbaumodul 8 von selbst in einer Position gehalten werden, in welcher das Fahrzeug 7 zum Ankoppeln lediglich heranfahren muss, um beispielsweise das Gegenkoppelungsteil 4 in den Fangbereich 32 zu verbringen. Im angekoppelten Zustand kann die Aufstellvorrichtung 81 eingefahren werden, damit diese den weiteren Betrieb nicht behindert. Die einfahrbare Aufstellvorrichtung 81 kann beispielsweise als Schwenkbares Standbein oder als Teleskopbein ausgebildet sein.

Das Anbaumodul 8 kann weiters Adapter für herkömmliche Anhängerkupplungssysteme ausgebildet sein.

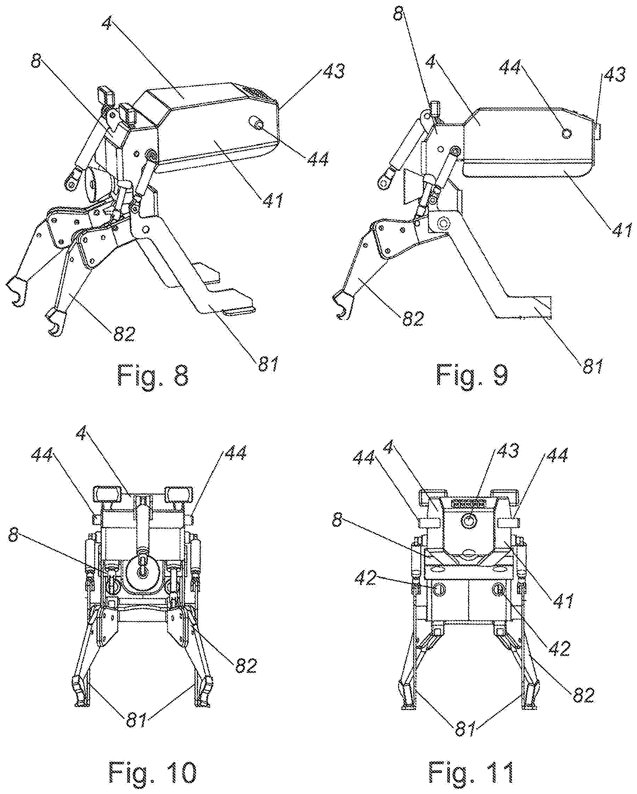

Gemäß der bevorzugten Ausführungsform eines Anbaumoduls gemäß den Fig. 8 bis 16 kann vorgesehen sein, dass das Anbaumodul 8 einen Dreipunkt-Kraftheber mit Unterlenkern 82 aufweist, welcher insbesondere über eine weiter Zapfwelle verfügt. Hierbei kann insbesondere die einfahrbare Aufstellvorrichtung 81 als zwei schwenkbare Standbeine ausgebildet sein, wobei das Anbaumodul 8 auf den Unterlenkern und den Standbeinen aufgestellt werden kann.

## Patentansprüche

1. Koppelungsteil (1) eines Fahrzeugkoppelungssystems (2), wobei das Koppelungsteil (1) eine Positioniereinrichtung (3) zum Führen eines Gegenkoppelungsteils (4) in eine Fixierposition bei einem Ankoppelungsvorgang aufweist, wobei eine Fixiereinrichtung (5) zwischen einer Freigabestellung und einer Fixierstellung bewegbar angeordnet ist, wobei die Fixiereinrichtung (5) in der Fixierstellung das Gegenkoppelungsteil (4) in der Fixierposition lagefest fixieren kann, wobei die Positioniereinrichtung (3) eine Zentrieraufnahme (34) aufweist, in welcher ein Einschubkörper (41) des Gegenkoppelungsteils (4) eingebracht werden kann, und wobei sich die Zentrieraufnahme (34) in Richtung eines ersten Endes der Zentrieraufnahme (34) verengt, **dadurch gekennzeichnet, dass** die Positioniereinrichtung (3) eine Fangvorrichtung (31) aufweist, dass die Fangvorrichtung (31) wenigstens einen beweglichen Fangarm (33) aufweist, und dass der Fangarm (33) derart bewegbar gelagert ist, dass der Fangarm (33) bei einer Einziehbewegung zunächst in Richtung der Zentrieraufnahme (34) bewegt wird und anschließend in Richtung des ersten Endes der Zentrieraufnahme (34) bewegt wird, um einen in einem Fangbereich (32) angeordneten Gegenkoppelungsteil (4) in die Fixierposition zu verbringen, wobei der Gegenkoppelungsteil (4) durch die Zentrieraufnahme (34) zentriert wird.

2. Koppelungsteil (1) nach Anspruch 1, **dadurch gekennzeichnet, dass** das Koppelungsteil (1) eine Kontaktiereinrichtung (6) mit bewegbar angeordneten Anschlüssen (61) aufweist, wobei die Kontaktiereinrichtung (6) in der Fixierstellung der Fixiereinrichtung (5) die Anschlüsse (61) in Richtung eines in der Fixierposition befindlichen Gegenkoppelungsteils (4) bewegen kann.

3. Koppelungsteil (1) nach Anspruch 2, **dadurch gekennzeichnet, dass** die Kontaktiereinrichtung (6) im Bereich des ersten Endes der Zentrieraufnahme (34) angeordnet ist.

4. Koppelungsteil (1) nach Anspruch 2 oder 3, **dadurch gekennzeichnet, dass** die Kontaktiereinrichtung (6) eine beweglich gelagerte Andockplatte (62) aufweist, wobei die Anschlüsse (61) an der Andockplatte (62) angeordnet sind, und dass die Andockplatte (62) mittels einer Verschiebeeinheit (63) von einer ersten Position in eine zweite Position verschiebbar ist, wobei in der zweiten Position die Anschlüsse (61) der Andockplatte (62) mit einem in der Fixierposition angeordneten Gegenkoppelungsteil (4) wirkverbunden sein können.

5. Koppelungsteil (1) nach einem der Ansprüche 2 bis 4, **dadurch gekennzeichnet, dass** die Anschlüsse (61) der Kontaktiereinrichtung (6) einen Zapfwellenabtrieb (64) und/oder einen Antriebswellenabtrieb umfassen.

6. Koppelungsteil (1) nach einem der Ansprüche 2 bis 5, **dadurch gekennzeichnet, dass** die Anschlüsse (61) der Kontaktiereinrichtung (6) einen elektrischen Anschluss (65), einen hydraulischen Anschluss und/oder einen Druckluftanschluss umfassen.

7. Koppelungsteil (1) nach einem der Ansprüche 1 bis 6, **dadurch gekennzeichnet, dass** die Fixiereinrichtung (5) wenigstens ein Fixierelement (51) mit einem Kontaktelement (52) aufweist, und dass das wenigstens eine Fixierelement (51) einen verschiebbaren, insbesondere keilförmigen, Fixierbolzen (53) aufweist, welcher Fixierbolzen (53) ein am Kontaktelement (52) aufliegendes Gegenkontaktelement (42) eines Gegenkoppelungsteils (4) in der Fixierposition hintergreifen und am Kontaktelement (52) fixieren kann.

8. Fahrzeugkoppelungssystem (2) umfassend einen Koppelungsteil (1) nach einem der Ansprüche 1 bis 7 und ein Gegenkoppelungsteil (4), **dadurch gekennzeichnet, dass** das Gegenkoppelungsteil (4) in der Fixierposition durch die Fixiereinrichtung (5) lagefest am Koppelungsteil (1) fixierbar ist.

9. Fahrzeugkoppelungssystem (2) nach Anspruch 8, **dadurch gekennzeichnet, dass** das Gegenkoppelungsteil (4) Gegenanschlüsse (43) aufweist, und dass die Kontaktiereinrichtung (6) die Anschlüsse (61) des Koppelungsteils (1) und Gegenanschlüsse (43) eines in der Fixierposition befindlichen Gegenkoppelungsteils (4) wirkverbinden kann.

10. Fahrzeug (7) umfassend wenigstens einen Koppelungsteil (1) nach einem der Ansprüche 1 bis 7.

11. Fahrzeug (7) nach Anspruch 10, **dadurch gekennzeichnet, dass** das Fahrzeug (7) einen Frontbereich (71) und einen Heckbereich (72) aufweist, und dass jeweils ein Koppelungsteil (1) an dem Frontbereich (71) und dem Heckbereich (72) angeordnet ist.

12. Anbaumodul (8) für ein Fahrzeug (7), wobei das Anbaumodul (8) einen Gegenkoppelungsteil (4) mit Gegenanschlüsse (43) aufweist, wobei der Gegenkoppelungsteil (4) an einem Koppelungsteil (1) des Fahrzeuges (7) lagefest fixierbar ist, und wobei die Gegenanschlüsse (43) mit Anschlüssen (61) des Koppelungsteils (1) verbindbar sind, **dadurch gekennzeichnet, dass** der Gegenkoppelungsteil (4) einen Einschubkörper (41) zum Einbringen in eine Zentrieraufnahme (34) des Koppelungsteils (1) aufweist, und dass am Einschubkörper (41) angeformte Fortsätze als Fangaufnahmen (44) für einen Fangarm (33) des Koppelungsteils (1) ausgebildet sind.

13. Anbaumodul (8) nach Anspruch 12, **dadurch gekennzeichnet, dass** das Anbaumodul (8) eine einfahrbare Aufstellvorrichtung (81) aufweist.

14. Verfahren zum Koppeln eines Fahrzeugkoppelungssystems (2), insbesondere nach Anspruch 8, wobei in einem Positionierschritt ein Gegenkoppelungsteil (4) in eine Fixierposition eines Koppelungsteils (1) geführt wird, wobei das Gegenkoppelungsteil (4) in einem Fixierschritt von einer Fixiereinrichtung (5) des Koppelungsteils (1) lagefest an dem Koppelungsteil (1) fixiert wird, wobei anschließend in einem Kontaktierschritt von einer Kontaktiereinrichtung (6) des Koppelungsteils (1) Anschlüsse (16) des Koppelungsteils (1) und Gegenanschlüsse (43) des Gegenkoppelungsteils (4) wirkverbinden werden, **dadurch gekennzeichnet, dass** in dem Positionierschritt das Gegenkoppelungsteil (4) durch einen beweglichen Fangarm (33) einer Fangvorrichtung (31) in die Fixierposition des Koppelungsteils (1) geführt wird und dabei durch eine Zentrieraufnahme (34) zentriert wird, dass sich die Zentrieraufnahme (34) in Richtung eines ersten Endes der Zentrieraufnahme (34) verengt, und dass der Fangarm (33) bei einer Einziehbewegung zunächst in Richtung der Zentrieraufnahme (34) bewegt wird und anschließend in Richtung des ersten Endes der Zentrieraufnahme (34) bewegt wird.

## Claims

1. Coupling part (1) of a vehicle coupling system (2), wherein the coupling part (1) comprises a positioning device (3) for guiding a mating coupling part (4) into a fastened position during a coupling process, wherein a fastening device (5) is arranged such as to be movable between a release position and a fastening position, wherein the fastening device (5) in the fastening position can fasten the mating coupling part (4) in the fastened position in a positionally fixed manner, wherein the positioning device (3) has a centring receptacle (34), into which an insertion element (41) of the mating coupling part (4) can be introduced, and wherein the centring receptacle (34) narrows in the direction of a first end of the centring receptacle (34), **characterized in that** the positioning device (3) has a catch device (31), **in that** the catch device has at least one movable catch arm (33), and **in that** the catch arm (33) is movably mounted such that, during a draw-in movement, the catch arm (33) is first moved in the direction of the centring receptacle (34) and then is moved in the direction of the first end of the centring receptacle (34) in order to bring into the fastened position a mating coupling part (4) that is arranged in a catch region (32), the mating coupling part (4) being centred by the centring receptacle (34).

2. Coupling part (1) according to claim 1, **characterized in that** the coupling part (1) has a contacting device (6) with movably arranged connections (61), wherein the contacting device (6), in the fastening position of the fastening device (5), can move the connections (61) in the direction of a mating coupling part (4) that is in the fastened position.

3. Coupling part (1) according to claim 2, **characterized in that** the contacting device (6) is arranged in the region of the first end of the centring receptacle (34).

4. Coupling part (1) according to claim 2 or 3, **characterized in that** the contacting device (6) has a movably mounted docking plate (62), wherein the connections (61) are arranged on the docking plate (62), and **in that** the docking plate (62) is able to be displaced by means of a displacing unit (63) from a first position into a second position, wherein, in the second position, the connections (61) of the docking plate (62) can be operatively connected to a mating coupling part (4) that is arranged in the fastened position.

5. Coupling part (1) according to one of claims 2 to 4, **characterized in that** the connections (61) of the contacting device (6) comprise a PTO shaft output (64) and/or a drive shaft output.

6. Coupling part (1) according to one of claims 2 to 5, **characterized in that** the connections (61) of the contacting device (6) comprise an electrical connection (65), a hydraulic connection and/or a compressed-air connection.

7. Coupling part (1) according to one of claims 1 to 6, **characterized in that** the fastening device (5) has at least one fastening element (51) with a contact element (52), and **in that** the at least one fastening element (51) has a displaceable, in particular wedge-shaped, fastening pin (53), which fastening pin (53) is able to engage behind a mating contact element (42), bearing against the contact element (52), of a mating coupling part (4) in the fastened position and is able to fasten it to the contact element (52).

8. Vehicle coupling system (2) comprising a coupling part (1) according to one of claims 1 to 7 and a mating coupling part (4), **characterized in that** the mating coupling part (4) in the fastened position can be fastened to the coupling part (1) in a positionally fixed manner by means of the fastening device (5)

9. Vehicle coupling system (2) according to claim 8, **characterized in that** the mating coupling part (4) has mating connections (43), and **in that** the contacting device (6) can operatively connect the connections (61) of the coupling part (1) and the mating connections (43) of a mating coupling part (4) that is in the fastened position.

10. Vehicle (7) comprising at least one coupling part (1) according to one of claims 1 to 7.

11. Vehicle (7) according to claim 10, **characterized in that** the vehicle (7) has a front region (71) and a rear region (72), and **in that** in each case a coupling part (1) is arranged on the front region (71) and the rear region (72).

12. Add-on module (8) for a vehicle (7), wherein the add-on module (8) has a mating coupling part (4) with mating connections (43), wherein the mating coupling part (4) can be fastened to a coupling part (1) of the vehicle (7) in a positionally fixed manner, and wherein the mating connections (43) can be connected to connections (61) of the coupling part (1), **characterized in that** the mating coupling part (4) has an insertion element (41) for insertion into a centring receptacle (34) of the coupling part (1), and **in that** extensions which are integrally formed on the insertion element (41) are designed as catch receptacles (44) for a catch arm (33) of the coupling part (1).

13. Add-on module (8) according to claim 12, **characterized in that** the add-on module (8) has a retractable stand device (81).

14. Method for coupling a vehicle coupling system (2), in particular according to claim 8, wherein, in a positioning step, a mating coupling part (4) is guided into a fastened position of a coupling part (1), wherein, in a fastening step, the mating coupling part (4) is fastened to the coupling part (1) in a positionally fixed manner by means of a fastening device (5) of the coupling part (1), wherein then, in a contacting step, connections (16) of the coupling part (1) and mating connections (43) of the mating coupling part (4) are operatively connected by means of a contacting device (6) of the coupling part (1), **characterized in that**, in the positioning step, the mating coupling part (4) is guided into the fastened position of the coupling part (1) by means of a movable catch arm (33) of a catch device (31) and in the process is centred by a centring receptacle (34), **in that** the centring receptacle (34) narrows in the direction of a first end of the centring receptacle (34), and **in that** the catch arm (33), during a draw-in movement, is first moved in the direction of the centring receptacle (34) and then is moved in the direction of the first end of the centring receptacle (34).

## Revendications

1. Partie d'attelage (1) d'un système d'attelage de véhicule (2), laquelle partie d'attelage (1) comprend un dispositif de positionnement (3) destiné à guider une partie d'attelage opposée (4) dans une position de fixation lors d'une opération d'attelage, dans laquelle un dispositif de fixation (5) est disposé de façon mobile entre une position de libération et une position de fixation, le dispositif de fixation (5) pouvant immobiliser la partie d'attelage opposée (4) dans la position de fixation, dans laquelle le dispositif de positionnement (3) présente un réceptacle de centrage (34) dans lequel un insert (41) de la partie d'attelage opposée (4) peut être introduit, et dans laquelle le réceptacle de centrage (34) se resserre en direction d'une première extrémité du réceptacle de centrage (34), **caractérisée en ce que** le dispositif de positionnement (3) présente un mécanisme de rétention (31), **en ce que** le mécanisme de rétention (31) présente au moins un bras de rétention (33) mobile et **en ce que** le bras de rétention (33) est mobile de telle manière que lors d'un mouvement de rétraction, le bras de rétention (33) se déplace d'abord en direction du réceptacle de centrage (34), puis en direction de la première extrémité du réceptacle de centrage (34), afin d'amener une partie d'attelage opposée (4) disposé dans une zone de rétention (32) dans la position de fixation, la partie d'attelage opposée (4) étant centrée par le réceptacle de centrage (34).

2. Partie d'attelage (1) selon la revendication 1, **caractérisée en ce que** la partie d'attelage (1) présente un dispositif de contact (6) avec des raccords mobiles (61), le dispositif de contact (6) pouvant déplacer les raccords (61) en direction d'une partie d'attelage opposée (4) qui se trouve dans la position de fixation lorsque le dispositif de fixation (5) se trouve dans la position de fixation.

3. Partie d'attelage (1) selon la revendication 2, **caractérisée en ce que** le dispositif de contact (6) est disposé dans la zone de la première extrémité du réceptacle de centrage (34).

4. Partie d'attelage (1) selon la revendication 2 ou 3, **caractérisée en ce que** le dispositif de contact (6) présente une plaque d'approche (62) supportée de façon mobile, les raccords (61) étant disposés sur la plaque d'approche (62), et **en ce que** la plaque d'approche (62) peut être déplacée au moyen d'une unité de translation (63) d'une première position à une deuxième position, les raccords (61) de la plaque d'approche (62) pouvant être mis en liaison active avec une partie d'attelage opposée (4) disposée dans la position de fixation dans la deuxième position.

5. Partie d'attelage (1) selon l'une des revendications 2 à 4, **caractérisée en ce que** les raccords (61) du dispositif de contact (6) comprennent une sortie d'arbre de prise de force (64) et/ou une sortie d'arbre d'entraînement.

6. Partie d'attelage (1) selon l'une des revendications 2 à 5, **caractérisée en ce que** les raccords (61) du dispositif de contact (6) comprennent un raccord électrique (65), un raccord hydraulique et/ou un raccord pneumatique.

7. Partie d'attelage (1) selon l'une des revendications 1 à 6, **caractérisée en ce que** le dispositif de fixation (5) comprend au moins un élément de fixation (51) avec un élément de contact (52) et **en ce que** l'au moins un élément de fixation (51) présente un goujon de fixation (53) déplaçable, en particulier conique, lequel goujon de fixation (53) peut passer derrière un élément de contact opposé (42) d'une partie d'attelage opposée (4) reposant sur l'élément de contact (52) dans la position de fixation et le fixer sur l'élément de contact (52).

8. Système d'attelage de véhicule (2) comprenant une partie d'attelage (1) selon l'une des revendications 1 à 7 et une partie d'attelage opposée (4), **caractérisé en ce que** la partie d'attelage opposée (4) peut être immobilisée dans la position de fixation sur la partie d'attelage (1) par le dispositif de fixation (5).

9. Système d'attelage de véhicule (2) selon la revendication 8, **caractérisé en ce que** la partie d'attelage opposée (4) présente des raccords opposés (43) et **en ce que** le dispositif de contact (6) peut mettre en liaison active les raccords (61) de la partie d'attelage (1) et des raccords opposés (43) d'une partie d'attelage opposée (4) qui se trouve dans la position de fixation.

10. Véhicule (7) comprenant au moins une partie d'attelage (1) selon l'une des revendications 1 à 7.

11. Véhicule (7) selon la revendication 10, **caractérisé en ce que** le véhicule (7) présente une partie avant (71) et une partie arrière (72) et **en ce qu'**une partie d'attelage (1) est disposée sur la partie avant (71) et sur la partie arrière (72).

12. Module rapporté (8) pour un véhicule (7), lequel module rapporté (8) comporte une partie d'attelage opposée (4) avec des raccords opposés (43), la partie d'attelage opposée (4) pouvant être immobilisée en position sur une partie d'attelage (1) du véhicule (7) et les raccords opposés (43) pouvant être reliés à des raccords (61) de la partie d'attelage (1), **caractérisé en ce que** la partie d'attelage opposée (4) présente un insert (41) destiné à être introduit dans un réceptacle de centrage (34) de la partie d'attelage (1) et **en ce que** des saillies formées sur l'insert (41) sont conçues comme des réceptacles de rétention (44) pour un bras de rétention (33) de la partie d'attelage (1).

13. Module rapporté (8) selon la revendication 12, **caractérisée en ce que** le module rapporté (8) présente un mécanisme d'appui (81) rétractable.

14. Procédé pour l'accouplement d'un système d'attelage de véhicule (2), en particulier selon la revendication 8, dans lequel, dans une étape de positionnement, une partie d'attelage opposée (4) est amenée dans une position de fixation d'une partie d'attelage (1), la partie d'attelage opposée (4) étant immobilisée en position sur la partie d'attelage (1) par un dispositif de fixation (5) de la partie d'attelage (1) dans une étape de fixation, des raccords (16) de la partie d'attelage (1) et des raccords opposés (43) de la partie d'attelage opposée (4) étant ensuite mis en liaison active par un dispositif de contact (6) de la partie d'attelage (1) dans une étape de mise en contact, **caractérisé en ce que** dans l'étape de positionnement, la partie d'attelage opposée (4) est guidée par un bras de rétention (33) mobile d'un mécanisme de rétention (31) dans la position de fixation de la partie d'attelage (1) et centrée en même temps par un réceptacle de centrage (34), **en ce que** le réceptacle de centrage (34) se resserre en direction d'une première extrémité du réceptacle de centrage (34) et **en ce que** lors d'un mouvement de rétraction, le bras de rétention (33) est déplacé d'abord en direction du réceptacle de centrage (34), puis en direction de la première extrémité du réceptacle de centrage (34).
